# EUROPÄISCHE PATENTSCHRIFT

(11) **EP 2 730 384 B1**
(45) Veröffentlichungstag und Bekanntmachung des Hinweises auf die Patenterteilung: **28.09.2016**
(21) Anmeldenummer: 13190846.9
(22) Anmeldetag: 30.10.2013
(51) Int. Cl.: B29B 9/06, B02C 18/08, B02C 18/18

(54) **Granuliermesser für einen Messerkopf einer Granuliervorrichtung**
Cutter blade for a blade head of a granulating device
Couteau de granulation pour une tête porte lame d'un dispositif de granulation

(30) Priorität: 12.11.2012 AT 505062012
(43) Veröffentlichungstag der Anmeldung: 14.05.2014
(73) Patentinhaber: ECON GmbH, 4616 Weisskirchen/Traun (AT)
(72) Erfinder: Gerhard, Hehenberger, 4622 Eggendorf (AT)
(74) Vertreter: Patentanwaltskanzlei Hübscher

(56) Entgegenhaltungen:
- DE-A1- 4 344 801
- DE-T5-112010 003 023
- US-A- 4 291 445
- US-A- 5 060 875
- US-A- 5 791 570
- US-A1- 2009 110 833
- US-A1- 2011 240 783
- US-A1- 2011 302 889
- N.N.: "Flammspritzen", , XP002718868, Gefunden im Internet: URL:http://de.wikipedia.org/wiki/Flammspri tzen [gefunden am 2014-01-17]
- N.N.: "Hochgeschwindigkeit-Flammspritzen", , XP002718869, Gefunden im Internet: URL:http://de.wikipedia.org/wiki/Hochgesch windigkeit-Flammspritzen [gefunden am 2014-01-17]

## Beschreibung

Die Erfindung bezieht sich auf eine Granuliervorrichtung für einen Messerkopf, dessen Granuliermesser über den Messerkopf an eine Lochplatte angedrückt gehalten werden, wobei die Messerkörper eine Schneidkante und eine von der Schneidkante ausgehende Spanfläche bilden.

Zum Granulieren von thermoplastischen Kunststoffen werden die schmelzflüssigen Kunststoffe durch im Bereich einer Lochplatte in konzentrischen Kreisen angeordnete Düsen gefördert, um die erstarrenden Kunststoffstränge mit Hilfe eines Messerkopfes durchtrennen zu können, der eine zu den Teilkreisen der Düsen konzentrische Drehachse aufweist und eine Vielzahl von über den Umfang verteilten Granuliermessern trägt, die über den Messerkopf an die Lochplatte angedrückt gehalten werden. Die Reibungskräfte zwischen der Lochplatte und den Granuliermessern bedingen einen Verschleiß, der im Bereich der Granuliermesser jedoch keine gleichmäßige Abnützung über die Schneidkantenlänge mit sich bringt, sondern im Bereich der Durchtrittslöcher der Lochplatten einen größeren Abtrag bedingt, was die Standzeit der Granuliermesser erheblich beeinträchtigt. Zur Verbesserung der Verschleißfestigkeit der Granuliermesser wurde bereits vorgeschlagen (US 2009/0110833 A1), die Granuliermesser im Bereich der Schneidkante und der Freifläche, aber auch im Bereich ihrer Umfangsflächen zu härten oder mit einer beispielsweise durch ein Flammspritzen aufgebrachten, härteren Beschichtung als den übrigen Messerkörper zu versehen. Verschleißfestere Granuliermesser bedingen allerdings einen größeren Verschleiß im Bereich der Lochplatte.

Der Erfindung liegt somit die Aufgabe zugrunde, Granuliermesser für eine Granuliervorrichtung für Kunststoffe so auszugestalten, dass die Standzeit der Granuliermesser gesteigert werden kann, ohne einen höheren Verschleiß im Bereich der Lochplatte in Kauf nehmen zu müssen.

Ausgehend von einem Granuliermesser der eingangs geschilderten Art löst die Erfindung die gestellte Aufgabe dadurch, dass die Spanfläche eine im Vergleich zum übrigen Messerkörper härtere Beschichtung aufweist.

Der Erfindung liegt die Erkenntnis zugrunde, dass der in Drehrichtung des Messerkopfes hintere Lochrand der Durchtrittslöcher in der Lochplatte den größeren Verschleiß der Schneidkanten im Überdeckungsbereich der Granuliermesser mi den Durchtrittslöchern bedingt, wenn die Schneidkanten über diesen hinteren Lochrand unter einer entsprechenden Andrückkraft hinwegbewegt werden. Wird daher die von der Schneidkante ausgehende Spanfläche der Granuliermesser mit einer verschleißfesteren, härteren Beschichtung versehen, so wird dem Verschleiß der von der Seite der Spanfläche her über die hinteren Lochränder belasteten Schneidkante ein höherer Verschleißwiderstand entgegengesetzt, der eine erhebliche Steigerung der Standzeit der Granuliermesser nach sich zieht, ohne die Reibungsverhältnisse zwischen den Granuliermessern und der Lochplatte entscheidend zu verändern, weil ja der Messerkörper selbst keine größere Härte aufzuweisen braucht.

Für die Beschichtung der Spanfläche des Messerkörpers ist eine gute Haftung auf dem Messerkörper für die Verlängerung der Standzeit der Granuliermesser von wesentlicher Bedeutung, weil mit einem Ablösen der Beschichtung im hierfür besonders anfälligen Schneidkantenbereich die Wirkung der Beschichtung wieder aufgehoben würde. Um vorteilhafte Haftbedingungen sicherzustellen, kann die Beschichtung durch ein Hochgeschwindigkeitsflammspritzen auf der Spanfläche des Granuliermessers aufgebracht werden, was einerseits eine dauerhafte Beschichtung der Messerkörper erlaubt und in Folge davon die Möglichkeit schafft, dünne Schichten auf die Keilflächen aufzubringen, wodurch das Verschleißverhalten der Schneidkanten entscheidend verbessert werden kann, zugleich aber kaum Einfluss auf die Reibungsverhältnisse zwischen dem Messerkörper und der Lochplatte genommen wird.

In der Zeichnung ist der Erfindungsgegenstand beispielsweise dargestellt. Es zeigen
Fig. 1 eine übliche Granuliervorrichtung ausschnittsweise im Bereich eines mit einer Lochplatte zusammenwirkenden, erfindungsgemäßen Granuliermessers in einem vereinfachten Schnitt und
Fig. 2 das Granuliermesser im Bereich seiner Schneidkante in einer Ansicht senkrecht zur Lochplatte in einem größeren Maßstab.

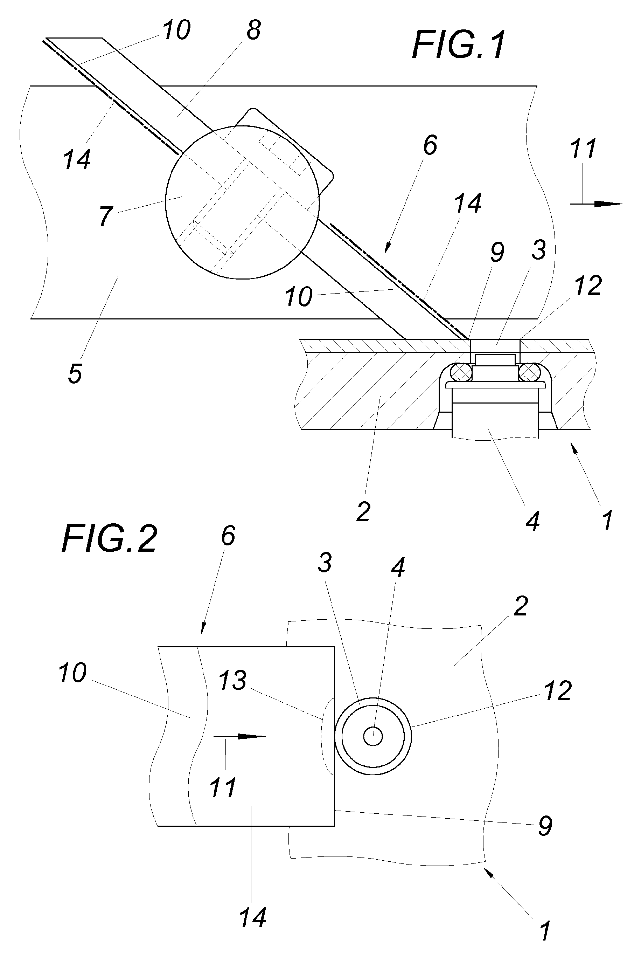

Die in der Fig. 1 wiedergegebene Granuliervorrichtung weist in herkömmlicher Weise einen nicht näher dargestellten Granulierkopf 1 auf, der eine Lochplatte 2 mit entlang zumindest eines Teilkreises angeordneten Durchtrittslöchern 3 umfasst, in die Düsen 4 ragen. Durch die Düsen 4 treten Kunststoffstränge aus, die erstarren und mit Hilfe eines Messerkopfes 5 in kleine Stücke geteilt werden. Zu diesem Zweck weist der Messerkopf 5 einen zum Teilkreis der Düsen 4 und damit der Durchtrittslöcher 3 der Lochplatte 2 koaxialen Kranz von Granuliermessern 6 auf, die in Messerhaltern 7 festgeklemmt sind. Diese Granuliermesser 6 bilden jeweils einen Messerkörper 8, der mit einer Schneidkante 9 versehen ist, von der eine Spanfläche 10 ausgeht. Die über den Messerkopf 5 an die Lochpatte 2 angedrückten Granuliermesser 6 werden konzentrisch zum Teilkreis der Durchtrittslöcher 3 in der Lochplatte 2 angetrieben. Die Drehrichtung 11 ist durch den Pfeil angedeutet.

Der aus den Düsen 4 und durch die Durchtrittslöcher 3 in der Lochplatte 2 austretende, erstarrende Kunststoffstrang wird mit Hilfe der Granuliermesser 6 durchtrennt, wobei sich im Bereich der Schneidkante 9 ein ungleichmäßiger Verschleiß einstellt, weil die Schneidkante 9 insbesondere durch den in Drehrichtung 11 hinteren Lochrand 12 der Durchtrittslöcher in der Lochplatte 2 belastet wird. Ohne besondere Maßnahmen ergäbe sich daher ein Verschleiß 13 der Schneidkante 9, wie er in der Fig. 2 strichpunktiert angedeutet ist.

Um diesen Verschleiß 13 zu verringern, wird die Spanfläche 10 des Messerkörpers 8 mit einer verschleißfesteren Beschichtung 14 versehen, die den Verschleißwiderstand der Schneidkante 9 des Messerkörpers 8 im Bereich der durch den hinteren Lochrand 12 beaufschlagten Spanfläche 10 erhöht, ohne die Reibungsverhältnisse zwischen dem Messerkörper 8 und der Lochplatte 2 maßgeblich zu beeinflussen, weil ja der Messerkörper 8 selbst aus einem vergleichsweise weichen Werkstoff hergestellt werden kann. Dies bedeutet, dass die Standzeit solcher mit einer verschleißfesteren Beschichtung 14 versehenen Granuliermesser 6 erheblich gesteigert werden kann. Voraussetzung hierfür ist allerdings, dass die Beschichtung 14, die vergleichsweise dünn auf den Messerkörper aufgebracht wird, eine ausreichende Haftung auf der Spanfläche 10 aufweist. Diese Haftung kann vorteilhaft dadurch sichergestellt werden, dass die Beschichtung durch ein Hochtemperaturflammspritzen aufgebracht wird.

Wie der Fig. 1 entnommen werden kann, können die Granuliermesser 8 als Wendemesser ausgebildet sein. In diesem Fall sind die Beschichtungen 14 auf beiden Seiten der Wendemesser vorzusehen.

## Patentansprüche

1. Granuliervorrichtung für Kunststoffe mit einem Messerkopf (5), dessen Granuliermesser (6) über den Messerkopf (5) an eine Lochplatte (2) angedrückt gehalten werden, wobei die Messerkörper (8) eine Schneidkante (9) und eine von der Schneidkante (9) ausgehende Spanfläche (10) bilden, **dadurch gekennzeichnet, dass** die Spanfläche (10) der Messerkörper (8) eine im Vergleich zum übrigen Messerkörper (8) härtere Beschichtung (14) aufweist.

2. Granuliervorrichtung nach Anspruch 1, **dadurch gekennzeichnet, dass** die Beschichtung (14) durch ein Hochgeschwindigkeitsflammspritzen auf der Spanfläche (10) des Messerkörpers (8) aufgebracht ist.

## Claims

1. Granulating apparatus for synthetic materials, comprising a cutter head (5), of which the granulating cutters (6) are held pressed against a perforated plate (2) by means of the cutter head (5), wherein the cutter bodies (8) form a cutting edge (9) and a cutting face (10) originating from the cutting edge (9), **characterised in that** the cutting face (10) of the cutter bodies (8) comprises a coating (14) which is harder in comparison with the rest of the cutter body (8).

2. Granulating apparatus as claimed in claim 1, **characterised in that** the coating (14) is applied to the cutting face (10) of the cutter body (8) by means of high-speed flame spraying.

## Revendications

1. Dispositif pour la granulation de matière plastique, avec une tête de granulation (5) dont les couteaux de granulation (6) sont maintenus pressés par la tête de granulation (5) au niveau d'une plaque perforée (2), le corps de couteau (8) formant une arête de découpe (9) et une face de coupe (10) partant du bord de découpe (9), **caractérisé en ce que** la face de coupe (10) du corps de couteau (8) présente un revêtement (14) plus dur comparativement au reste du corps de couteau (8).

2. Dispositif pour la granulation selon la revendication 1, **caractérisé en ce que** le revêtement (14) est appliqué sur la face de coupe (10) du corps de couteau (8) par une projection par flamme à haute vitesse.
